# EUROPEAN PATENT APPLICATION

(11) **EP 3 299 098 A1**
(43) Date of publication of application: **28.03.2018**
(21) Application number: 16275140.8
(22) Date of filing: 21.09.2016
(51) Int. Cl.: B22F 3/105, B22F 7/06

(54) **IMPROVED ADDITIVE LAYER MANUFACTURING**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

This invention relates to additive layer manufacturing (ALM) and in particular to a method to minimise residual thermal stress in a component manufactured by powder fed ALM processes, and objects formed therefrom. There is provided a three dimensional object formed by additive layer manufacture, wherein said object is formed from a plurality of sintered material layers of a feed material, wherein said object comprises at least one formed void, said void substantially filled with a filler material.

## Description

### FIELD OF THE INVENTION

This invention relates to additive layer manufacturing (ALM) and in particular to a method to minimise residual thermal stress in a component manufactured by powder fed ALM processes, and objects formed therefrom.

### BACKGROUND

Additive manufacturing (AM) or additive layer manufacturing (ALM) is a collective term for a group of different manufacturing processes that are able to produce functional parts in a layer-wise manner, without moulds or dies. These processes use a heat or light energy source such as a laser beam or a welding arc to melt, sinter or cure a feed material in the form of powder, liquid or wire in a controlled manner. Subsequent layers are built up upon each preceding layer in a vertical direction. Unlike conventional machining processes, these computer-aided manufacturing (CAM) technologies build complete parts or, alternatively, build features on existing components, by adding material rather than by removing it.

Laser Powder Bed technology uses the laser to sinter metallic or polymer powder contained in a build chamber. Each time a layer of the component is sintered within the build chamber, a new layer of powder is introduced from the powder feed bed, the surface of which is levelled off so as to cover the surface of the work piece with a defined layer thickness. The laser is then scanned over the fresh powder covering the work piece along a defined path which creates a cross-section shape of the component to be manufactured. Powder is sintered to this shape and solidifies to a layer of material on the work piece in the desired shape. The powder is then re-levelled, slightly higher, and the process is repeated until the component has been fully formed.

In the Laser Blown Powder process, during deposition of the initial layer(s), the laser beam is directed at a piece of starting material or "parent plate" to create a weld pool in the parent plate to which the powder is added. The powder is carried to the focal point of the laser in a precisely directed carrier gas such as Argon. The laser and material deposition head is then traversed across the parent plate until an entire layer is built up, whereby the head moves upwards one layer in height and continues to deposit material in the same manner.

It is a problem with these methods of manufacturing that due to the highly focussed beam of the laser, the work piece is subject to intense localised heating. This heating creates steep thermal gradients in the work piece between the feed material being sintered and the cooler material which surrounds it. If transverse compressive stresses in the work piece, caused by very hot expanding material, exceed the yield point of the material then compressive plastic yielding (CPY) will occur in the material surrounding the incidence of the heat source. On cooling and shrinkage of the work piece, high tensile residual transverse stresses will be created across the weld / sinter area and these will be balanced by residual compressive stresses further away from this area. It is these residual compressive stresses which cause buckling distortion when they exceed a critical buckling load (CBL) for the parent material of the work piece. This is particularly prevalent when working with very thick section material, typically of the order of 10+mm.

It is accordingly an aim of the present invention to overcome the aforementioned difficulties with prior art powder AM methods.

### SUMMARY OF THE INVENTION

In a first aspect, the present invention provides a three dimensional object formed by additive layer manufacture, wherein said object is formed from a plurality of sintered material layers of a feed material, wherein said object comprises at least one formed void, said void substantially filled with a filler material.

The feed material may be selected from a metal powder, curable ceramic powder, or curable polymer powder. The feed material may be a solidifyable material. The feed material may be in a first state, and when exposed to a high energy stimulus, such as, for example heat, radiation, laser, UV, electron beam, causes transformation the material to a second cured or solidified state.

The formed at least one void is a is purposefully formed void or cavity within the ALM three dimensional 3D object.

It is well understood that the manufacture of very thick components by ALM methods, such as, for example laser sintering results in increased residual stresses, as discussed above. Where the object formed is not load bearing, it is known to substitute thick sections with walls of thin cross section, to reduce the stress within the object, typically introducing a passage to allow the powder contained within the component to exit / be removed. However, the absence of material inside the ALM manufactured component significantly reduces the structural performance of the object, therefore making the use of an object with a formed void only suitable for non-load bearing or cosmetic uses.

It is also known that a solid section may be replaced by a lattice or honeycombed like structure, typically created through proprietary software, which can prove difficult and cost ineffective to design and simulate using, for example FEA.

The use of a filler material in the formed void has been found to retain the structural integrity of an object, such that the object remains suitable for load bearing components and it has been found that structures formed by this method retain as near full compressive strength as a cast material.

The filler material may be selected from any suitable material such as a metal, curable monomer, polymer, rubber, metalloid, curable ceramic partially sintered feed material feed material (substantially non-sintered.

In a highly preferred arrangement, the filler is the feed material, such that during the ALM process, portions of the feed material are selectively not sintered and are left substantially in their original first state, thereby the ALM process forms the object and the formed void is filled layer-wise with the feed material in its first state. The final stages of the ALM process may then provide the complete encapsulation of the filled formed void, to create the final object.

The feed material in its first state may be wholly or partially sintered to material which is being selectively sintered by the laser, due to the heat buildup within the work part. It has been observed that when the feed material is encapsulated in the final formed void, that due to the presence of the heating stimulus either during the completion of the build or standard heat treatment following the build, the filler material when selected from the feed material may become partially sintered to the material directly sintered by laser.

Alternatively the formed void may be fully formed to the desired depth, as a blind formed void ie blind hole and the ALM process stopped, so as to allow the blind formed void to be filled with the filler material. This method allows the formed void to be more easily filled with a filler material that is not the same as the feed material.

The object is typically of a 3D polygonal shape, preferably the at least one void has substantially the same polygonal shape as the object, further where there are at least two voids, or a plurality of voids they may collectively have substantially the same polygonal shape as the object.

In a highly preferred arrangement the edges and/or corners of the at least one void comprises radius shaped edges.

The at least one void is defined by walls, said walls create the bulk of the material within the object to be formed, in a further arrangement the wall or walls of the void which has the minimum dimension may be substantially semicircular in cross-section.

Preferably there may be at least two voids or a plurality of voids, they may be arranged in a non-stacked arrangement within said object. The object has a substantially 3 D polygonal shape, and where there is a longest dimension the at least two voids may be stacked along the plane defined by the longest dimension. Where the object has 3D polygonal shape with a minimum dimension, preferably the at least two voids are arranged in a single layer along the plane defined by said minimum dimension, such that they are substantially only one void along said dimension.

In a lattice or honeycombed structure, relatively thin sections pockets are introduced within the structure to reduce the residual stresses upon laser sintering. The at least one void or plurality of voids are relatively small number when compared to a lattice structure that may occupy the same space in prior art techniques.

The metallic powder contained within these pockets themselves may partially sinter but perform the task of reducing the thermal loading within the part and therefore the residual stresses that are a causation of geometrical and mechanical defects. The orientation of the stress-relieving pockets should depend upon the expected load case for the thick section. Load paths, particularly tensile and flexural loads should be directed through fully sintered material.

In a preferred arrangement the object may now be formed of both thin and thick sections, and therefore the use of filled formed voids may be applied to sections where thickness of the object exceeds that which can be reliably laser sintered.

In a preferred arrangement the formed at least one void or plurality of voids have a total dimension which is less than 40% of the corresponding dimension of the object, more preferably the formed voids have a total dimension which is in the range of 20% to 30% of the corresponding dimension of the object.

The at least one voids are defined by walls which create the object, wherein the walls of said at least one void or plurality of voids have a total dimension which is at least 40% of the corresponding dimension of the object, more preferably the walls have a dimension which are in the range of 50% to 60% of the corresponding dimension of the object.

The preferred techniques for powder feedstock are: blown powder and powder bed. These techniques typically employ a laser as the heat energy source.

According to a further aspect of the invention there is provided
a method of forming an object comprising a filled formed void, by powder additive layer manufacturing, the method comprising:
   a) applying, by an energy source, energy to a first portion of a surface of a feed material sufficient to sinter said first portion;
   b) moving the heat source to progressively form a layer of sintered material;
   c) causing a second portion of the surface to not be subjected to the heat source, such that said second portion comprises the feed material,
   d) causing the formed layer of sintered material of the first portion of the surface to cool, to bring at least part of the formed layer to a state of crystallisation,
   e) repeating steps a) to d) as required whereby to form the object comprising a filled void, wherein said filled void comprises the feed material.
   The process is completed such that the feed material in a substantially un crystallised state, in the at least one void is entirely encapsulated.

The method may further comprise the step of optionally causing the object to undergo heat treatment in order to reduce residual thermal stresses whereby the feed material may become partially sintered.

According to a yet further aspect of the invention, there is further provided a method of forming an object comprising a filled formed void, by additive layer manufacturing, the method comprising:
a method of forming an object comprising a filled formed void, by powder additive layer manufacturing, the method comprising:
   a) applying, by an energy source, energy to a first portion of a surface of a first feed powder material sufficient to melt said first portion;
   b) moving the heat source to progressively form a layer of sintered material;
   c) causing an amount of feed material to be absent from a second portion of the surface,
   d) causing the formed layer of sintered material of the first portion of the surface to cool to bring at least part of the formed layer to a state of crystallisation,
   e) repeating steps a) b) and d) as required whereby to furnish a formed void in the object,
   f) filling the void with a filler material
   g) repeating steps a) to e) as required whereby to furnish an object comprising a filled formed void;
   i) optionally causing the work part to undergo heat treatment in order to reduce residual thermal stresses whereby the filler material in its original state may become partially sintered.

The delivery of the powder in step a) may be by way of inert gas blown delivery.

The step c) may comprise the step of removing the first feed material from a second portion of the surface. The crystallisation step may be force cooled or may be allowed to reach crystallisation

In a further aspect, the present invention provides additive layer manufacturing apparatus for forming an object. The apparatus comprises: a heat source configured to apply heat to a portion of a surface of an object or layer of feed material sufficient to melt or sinter said portion. The heat source being further configured to move relative to the object; a feed material delivery means configured to add feed material to the melted portion or alternatively on top of the sintered material; thereby producing an object through repetition of this process.

In a further aspect, the present invention provides a computer readable medium having computer-executable instructions adapted to cause Additive Manufacturing apparatus to operate in accordance with the method of any of the above aspects.

### BRIEF DESCRIPTION OF THE DRAWINGS

Figure 1 is a schematic illustration showing an example of blown powder AM apparatus
Figure 2 shows a top isometric view of an object with 4 voids filled with filler material
Figure 3 shows a top isometric view of an object with 4 voids
Figure 4 shows a method of forming layers and in-situ filling of the formed void
Figure 5 shows a method of forming a formed void and filing with a filler material
Figure 6 provides a powder bed method of manufacture.

### DETAILED DESCRIPTION

The terminology "Additive Manufacturing" is used herein to refer to all additive processes that may be used to produce components or assemblies, layer by layer, without moulds or dies e.g. by melting, sintering, bonding or curing material typically in the form of a powder, wire or liquid feedstock. The process typically uses a heat or light energy source such as a laser beam, electron beam, electrical heater or electric welding arc to melt or sinter etc. an amount of that material and deposit the material (e.g. on a base plate/work piece), and subsequently build layers of material upon each preceding layer.

Additive Manufacture (AM) may also be known *inter alia* as 3D printing, Direct Digital Manufacturing (DDM), Digital Manufacturing (DM), Additive Layer Manufacturing (ALM), Rapid Manufacturing (RM), Direct Manufacturing, Freeform Fabrication.

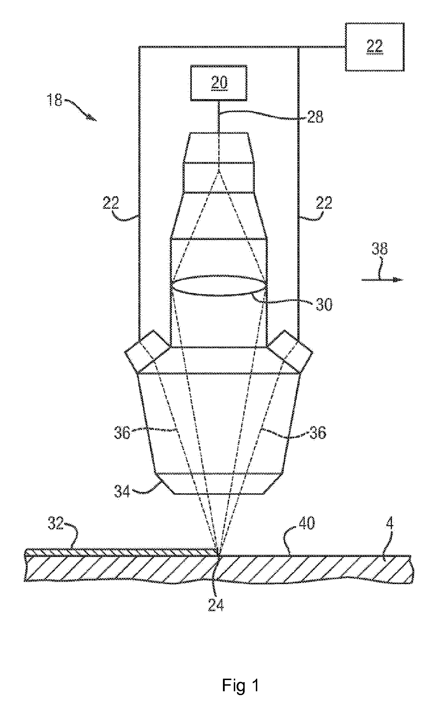

Figure 1 is a schematic illustration (not to scale) showing the AM apparatus 18 being used to create the portions of the object 4 by performing an AM process to add layers 32.

The AM apparatus 18 comprises a heat source in the form of a high powered laser 20, a source of metallic material in the form of a powder delivery system 22.

The laser 20 may be any appropriate type of laser, for example, an Nd:YAG laser that may operate at a wavelength of 1064nm, and have a continuous wave power output of, e.g. 500W, >1 kW, or greater, etc.

The laser 20 is focused upon a focal point 24 on the first surface 40 of the portion of the object 4 which is to be formed, whereby to melt the first surface 40 to form a weld pool. The laser 20 is controlled by a computer (not shown in the Figures) to deliver a laser beam optionally via an optical fibre 28 to conventional focussing optics 30 which focus the laser beam to the focal point 24 on the first surface 40 of the object 4.

The powder delivery system 22 delivers powder to the vicinity of the laser focal point 24. Thus, the powder is fully melted as it is deposited on the first surface 40 to form a layer 32 of sintered material.

In this embodiment the powder is a stainless steel 316 powder. The powder grains may, for example, have a diameter between 36 pm and 106 pm. The powder delivery system 22 delivers powder through a deposition nozzle 34 along a plurality of delivery lines 36 which may be disposed symmetrically around the deposition nozzle 34. In other embodiments, a different type of material (e.g. a different type of metallic power e.g. Aluminium AlSi10Mg powder) may be used.

In this embodiment, the AM apparatus 18 is moveable under the control of the computer in the X-Y plane that is parallel to the first surface 40 of the object 4, and vertically in the Z direction that is orthogonal to the first surface 40 of the object 4. Thus, the laser focal point 24 may be directed to any point in a working envelope in the X-Y plane and vertically so as to accommodate both work pieces of different height and also regions of different height within work pieces.

During operation, the AM apparatus 18 moves in a traverse direction, relative to the object 4, which is indicated by an arrow 38

In this embodiment, the layer 32 is cooled to a crystallised state using the forced cooling gas nozzle e.g. using air or a cryogenic spray jet.

In this embodiment, many layers are laid down beside one another and built on top of each other to form the object 8.

Regions (not shown) are not subjected to the laser to form the void (not shown).

Thus, AM apparatus 18 for performing an AM process is provided.

The above described methods and apparatus advantageously implement powder AM processes to produce objects with thick sections.

Additive manufacturing methods above may be employed to produce objects with enhanced load bearing and characteristics when compared to prior art ALM processes. In other words, the making of objects (e.g. structural components) that are able to carry greater loads before the onset of failure.

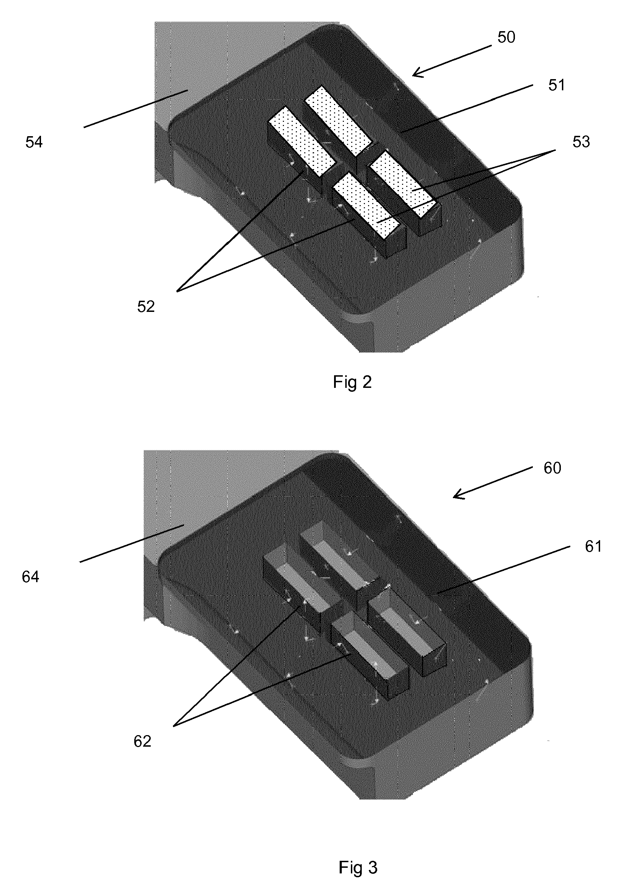

Turning to figure 2 there is a three dimensional object 50, which has been built up from a plurality of layers. The multiplicity of layers have provided the main body 51 of the object 50 and where the ALM process has purposefully omitted the solidification process it has furnished formed voids 52, which are filled with a filler material 53. Further layers will be added on top of the formed voids 52, to provide sintered outer layers (shown generally at 54).

Turning to figure 3 there is a three dimensional object 60, which has been built up from a plurality of layers. The multiplicity of layers have provided the main body 61 of the object 60 and where the ALM process has purposefully omitted the solidification process it has furnished formed voids 62, which is to be filled with a filler material. Further layers will be added on top of the formed voids 62, once they have been filled, to provide sintered outer layers (shown generally at 64).

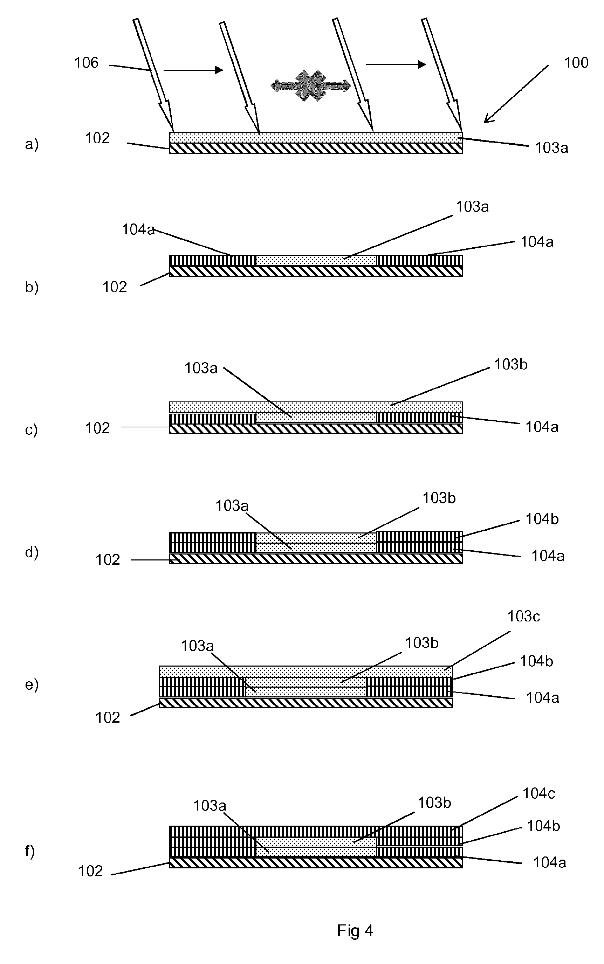

Turning to figure 4a-f, a first sintered layer 102 has a layer of sintered material 103a deposed thereon. An energy source 106 impinges on the surface of feed material 103a to form a sintered material 104a. Regions where the energy source is purposefully omitted allow portions of feed material 103a to remain, and is contained within the walls formed by sintered material 104a. In step c) a further layer of feed material 103b is deposed thereon, further energy is supplied to form regions of sintered material 104b. Similarly where the energy source is purposefully omitted allow portions of feed material 103a and 103b to remain. This is repeated to form n layers, with portions of feed material 103n and portions of sintered material 104n.

In step e) a yet further layer of feed material 103c is deposed thereon, the layer is sintered to form a complete solidified outer layer 104c, thereby creating a void filled with feed material 103a and 103b.

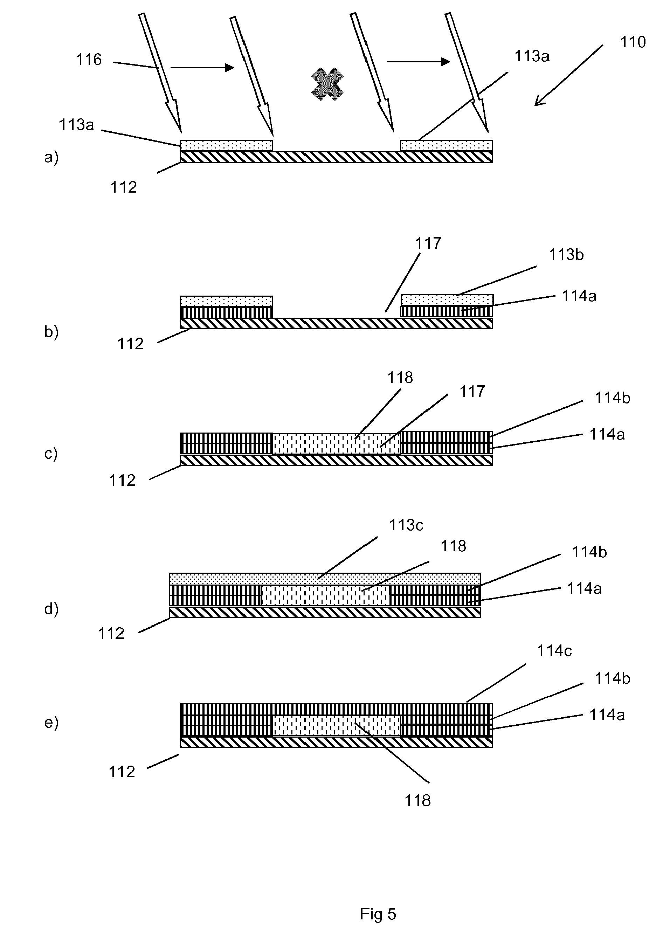

Turning to figure 5a-f, a first sintered layer 112 has a layer of feed material 113a deposed thereon. An energy source 116 impinges on the surface of feed material 113a to form a sintered material 114a. This is repeated for feed material 113b to form a sintered material 114b , This is repeated to form n layers, with portions of feed material 113n and portions of sintered material 114n. Regions where the energy source 116 and feed material 113a are purposefully omitted furnishes formed void 117

In step c) a filler material 118 is deposed in the formed void 117. In step d) a yet further layer of feed material 113c is deposed thereon, the layer is sintered to form a complete sintered outer layer 114c, thereby creating a void 117 filled with filler material 118.

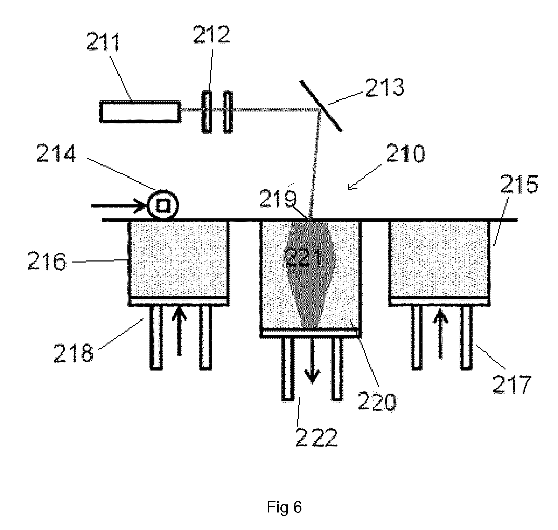

Figure 6 is a schematic illustration (not to scale) showing the AM apparatus 210 being used to create an object 221 by sintering of a feed material 220 which is delivered in layers by roller 214 from feed beds 215 and 216. The feed material 220 is powdered metallic material and is contained within feed beds 215 and 216.

The AM apparatus 210 comprises a heat source in the form of a high powered laser 211.

The laser 211 may be any appropriate type of laser, for example, an Nd:YAG laser that may operate at a wavelength of 1064nm, and have a continuous wave power output of, e.g. 200W, 500W etc.

The laser 211 is directed to incidence point 219 on the surface of the portion of the object 221 which is to be formed, whereby to sinter the surface layer. The laser 211 is controlled by a computer (not shown in the Figures) to deliver a laser beam through focussing optics 212 and via a directing mirror to direct the focussed laser beam on the surface of feed material 220. The laser sinters the powder after it is deposited on the uppermost surface to form a layer of solid material.

In this embodiment the powder is a stainless steel 316 powder, other common example is Aluminium AlSi10Mg powder. The powder grains may, for example, have a diameter between 30 µm and 110 µm. The powder delivery beds 215,216 are raised by mechanisms 217, 218 in an alternating manner and delivery roller 214 delivers powder to build bed 220 .

The AM apparatus 210 is under the control of a computer to control movements of the laser in the X-Y plane, which is parallel to the first surface of the object 221. The laser focal point 219 may be directed to any point in a working envelope in the X-Y plane and the build bed may move vertically in the Z axis by varying amounts so as to accommodate both work pieces of different heights and also regions of different heights within work pieces.

In this embodiment, the build bed is typically heated and layers are laid down on top of each other to form the object 221.

Regions (not shown) are not subjected to the laser to form the void (not shown).

The above described methods and apparatus advantageously implement powder AM processes to produce objects with thick sections.

Additive manufacturing methods above may be employed to produce objects with enhanced load bearing and characteristics when compared to prior art ALM processes. In other words, the making of objects (e.g. structural components) that are able to carry greater loads before the onset of failure.

## Claims

1. A three dimensional object formed by additive layer manufacture, wherein said object is formed from a plurality of sintered material layers of a feed material, wherein said object comprises at least one formed void, said void substantially filled with a filler material.

2. An object according to claim 1 wherein the feed material is selected from a metal powder, curable ceramic powder, or curable polymer powder

3. An object according to claim 1 or 2 wherein the filler material is selected from a metal, polymer, rubber, metalloid, ceramic, partially sintered feed material or feed material.

4. An object according to claim 3 wherein the filler material is selected from the feed material and partially sintered feed material.

5. An object according to any one of the preceding claims wherein the edges and/or corners of the at least one void comprises a radius.

6. An object according to any one of the preceding claims wherein the at least one void has substantially the same polygonal shape as the object.

7. An object according to any one of the preceding claims wherein there are a plurality of voids arranged in a non-stacked arrangement within said object.

8. An object according to any one of the preceding claims wherein the formed voids have a dimension which is less than 40% of the corresponding dimension of the object

9. An object according to claim 8, wherein the formed voids have a dimension which is in the range of 20% to 35% of the corresponding dimension of the object.

10. An object according to any one of the preceding claims wherein voids are defined by walls which create the object, wherein the walls have a dimension which are at least 40% of the corresponding dimension of the object.

11. An object according to claim 10, wherein the walls have a dimension which are in the range of 50% to 80% of the corresponding dimension of the object.

12. A method of forming an object comprising a filled formed void, by powder additive layer manufacturing, the method comprising:
a) applying, by an energy source, energy to a first portion of a surface of a feed material sufficient to sinter said first portion;
b) moving the heat source to progressively form a layer of sintered material;
c) causing a second portion of the surface to not be subjected to the heat source, such that said second portion comprises the feed material,
d) causing the formed layer of sintered material of the first portion of the surface to cool, to bring at least part of the formed layer to a state of crystallisation,
e) repeating steps a) to d) as required whereby to form the object comprising a filled void ,wherein said filled void comprises the feed material.

13. A method of forming an object comprising a filled formed void, by powder additive layer manufacturing, the method comprising:
a) applying, by an energy source, energy to a first portion of a surface of a first feed material sufficient to melt said first portion;
b) moving the heat source to progressively form a layer of sintered material;
c) causing an amount of feed material to be absent from a second portion of the surface,
d) causing the formed layer of sintered material of the first portion of the surface to cool to bring at least part of the formed layer to a state of crystallisation,
e) repeating steps a) to d) as required whereby to furnish a formed void in the object,
f) filling the void with a filler material
g) repeating steps a), b) and d) as required whereby to furnish an object comprising a filled formed void.

14. A method according to claim 13, wherein the step c) comprises the step of removing the first feed material from the second portion of the surface.
